# EUROPEAN PATENT APPLICATION

(11) **EP 0 640 461 A1**
(43) Date of publication of application: **01.03.1995**
(21) Application number: 94109983.0
(22) Date of filing: 11.07.1989
(51) Int. Cl.: B29C 47/00, B29C 59/02

(54) **Method for producing a flexible creased packaging material**

(30) Priority: 01.08.1988 SE 8802777; 01.08.1988 SE 8802778
(62) Divisional of application: 89112666.6
(71) Applicant: Tetra Laval Holdings & Finance SA, 1009 Pully (CH)
(72) Inventor: Rosén, Ake, S-253 72 Helsingborg (SE)
(74) Representative: Müller, Hans-Jürgen, Dipl.-Ing.

(57) **Abstract**

Crease lines (5, 6, 19, 20) of flexible creased packaging material to be used for the producing of fluid tight packaging containers are produced by deforming webs (4, 17, 18) or sheets, respectively, of the packaging material along the expected folding lines (4, 5, 6, 19, 20) in the melt (soft and plastic, respectively) condition of the webs which webs comprise thermoplastics and inorganic mineral fillers (at an amount of between 50 and 80% by weight).

## Description

The invention relates to a method for producing a flexible creased packaging material from which liquid-tight packaging containers can be produced.

A method of the type according to the first part of claim 1 is described in GB-A-1 554 143. According to this method between 5 and 70% by weight of inorganic particulate material and between 95 and 30% by weight of polypropylene (PP) or other PP-copoylmers are mixed so that the mixture comprises, in the soft or melt condition, a melt flow index between 0,55 and 2,2 according to ASTM (2,16 kg, 230° C). This molt mass is extruded in order to form sheets of a thickness between 0,1 and 1,2 mm after which extrusion steps the sheets are cooled and then polished or otherwise treated. Finally, the sheets are cut in order to form playing cards or are creased in order to form blanks comprising crease lines. The blanks can be bended along the crease lines which facilitate bending of different portions of the blanks with regard to neighbour portions thereof. The crease lines are produced by partially cutting away parts of the sheets according to GB-A-1 583 324 or by calendring the sheets in the solid condition between calender rolls which press portions of the sheets along the crease lines together in order to reduce the sheet thickness along the crease lines according to US-A-3 122 976.

However, such packaging material very often does not fullfill the conditions for preparing foldable containers which are filled with e.g. liquid filling goods which containers need stiffness (high resistance against deforming when filled) and need a high rigidity (high resistance against cracking in particular at the crease lines which are forming relatively sharp corners of the final packaging container). Weakening the thickness of the sheet according to the conventional methods for forming crease lines raises such problems.

Therefore, packaging materials comprising fiber fillers are much more favoured by the experts in the field of packaging materials. However, they comprise other disadvantages. There is very often a risk of crack formation in the packaging material in particular in the regions of 180° folding along a crease line in order to prepare the sealing finn of the final packaging containers which are produced by using tube forming, container forming, filling and container closing machines. Such tensile stresses frequently are so great that cracks occur not only in gas tight intermediate layers like aluminum foils but also in thermoplastic outer layers. Therefore, risks of leakage of the packed content occur which leakage can readily be absorbed by or impair the rigidity of the packaging material. It has been an aim for a long time period to find better packaging material freed of fibrous material but also avoiding the problems of the materials according to the first part of claim 1.

It is an object of the invention to provide a method for producing such packaging material which method facilitates bending of the material along the crease lines but substantially without the risks of cracks etc. disadvantages in the regions of the crease lines and folding lines, respectively, of the final packaging containers.

The invention is claimed in claim 1 and preferred embodiments are claimed in sub-claims.

The invention will be described in the following in more detail with special reference to the attached drawings, wherein
figure 1 shows a part of a packing material in web form,
figure 2 shows a strongly enlarged cross-section of the material in figure 1 along the line II-II,
figure 3 shows schematically an arrangement of the manufactuire of the packing material according to the invention,
figure 4 shows a part, corresponding to a whole package length, of a packing material in web form,
figure 5a is a strongly enlarged cross-section of the material in figure 4 along the line V-V,
Figure 5b is a cross section corresponding to that in Figure 5a of a packing material in accordance with a further embodiment of the present invention, and
Figure 6 shows schematically an arrangement for the manufacture of the packing material in Figure 4 and 5a.

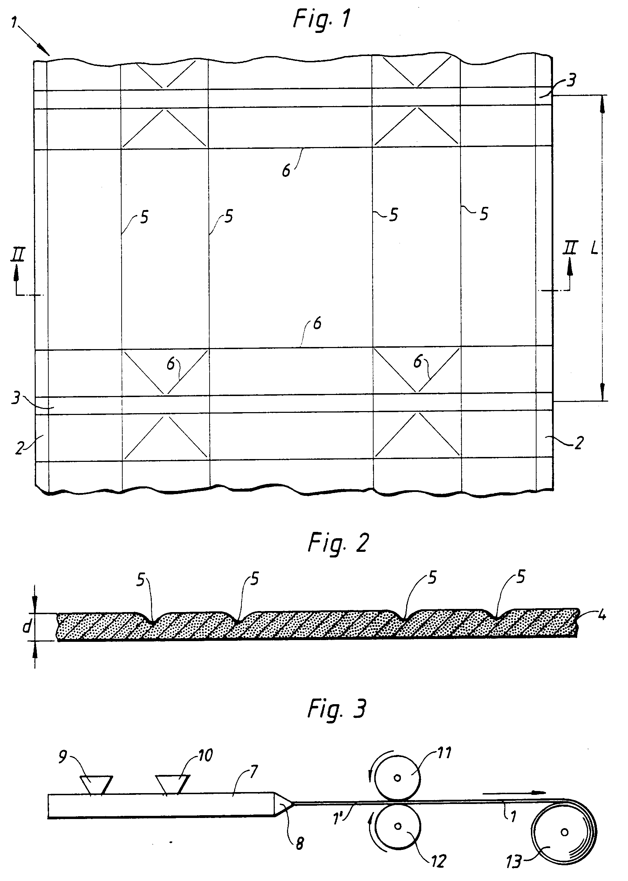

Figure 1 thus shows a part corresponding to a whole package length L of a material in web form which has been given the general reference designation 1. From the web 1 are manufactured packing containers in that both longitudinal edge zones 2 of the web 1 are joined to one another in an overlap joint so as to form a tube which subsequently is filled with the actual contents. The filled tube is divided thereafter into individual container units by means of repeated flattening and sealing of the tube along narrow transverse sealing zones 3 at right angles to the longitudianl axis of the tube. Finally the container units are separated from one another by cuts in the transverse sealing zones 3 and are given the desired shape, e.g. parallellepipedic, through a further forming and sealing operation.

The material in accordance with this embodiment of the present invention, as is evident from Figure 2, comprises a base layer 4 of mineral-filled propylene-based polymer with a melt index of between 0,5 and 5 according to ASTM (2,16kg, 230^{o}C). The quantity of filler in the polymer may vary between 50 and 80% of the total weight of the mixture, but preferably is within 65-75% by weight, which has been found to produce optimum properties of the material with regard to rigidity and modulus of elasticity.

Said propylene-based polymer may be a polypropylene homopolymer with a melt index of below 1 according to ASTM (2,16kg, 230^{o}), but preferably the propylene-based polymer is chosen among propylene-ethylene copolymers with a melt index within the above specified range of between 0,5 and 5 since they have turned out to withstand folding and bending operations without cracking even at low temperatures which normally occur during the conversion of the packing material into and filling of the fold packing containers with liquid food, such as milk.

The choice of filler is not critical in accordance with the invention, but, practically speaking, the whole of the arranged known mineral fillers may be used, e.g. mica, talc, calcium salts such as calcium sulphate or calcium carbonate etc. A base layer containing 65% by weight of calcium carbonate in particle form with a grain size of under 10 µm, however, has been found to be the material combination functioning well in practice which makes possible the manufacture of liquid-tight packing containers with the desired good dimensional rigidity. The material thickness d of the base layer may very inpractice between 100 and 400 µm, but preferably amounts to 300 µm.

To facilitate the conversion of the web 1 to packing containers the base layer 4 has been provided with an arbitrary pattern of crease lines 5 and 6 facilitating the folding, which respectively extend parallell and transversely to the longitudinal direction of the web. In the example shown the crease lines 5 and 6 have been formed by plastic deformation of the base layer 4 in connection with or immediately after extrusion of said layer.

The material in web form 1 described above can be manufactured with the help of an arrangement of the type shown schematically in Figure 3. The arrangement comprises an extruder 7 with a suitably dimensioned nozzle 8 and two feed-funnels 9 and 10 for the charging of the starting material necessary for the extrusion, that is to say granulated propylene-based polymer with a melt index of between 0,5 and 5 according to ASTM (2,16kg, 230^{o}), such as a polypropylene homopolymer or a propylene-ethylene copolymer, and mineral filler respectively. The thermoplastic mass containing between 50 and 80, e.g. 65% by weight of filler is heated to softening or incipient melting (approx. 180-300^{o}C), and is extruded through the nozzle 8 to form a 100-400 µm, e.g. 300 µm, film 1'. The film 1' is passed through the nip between co-operating, cooled pressure cylinders 11 and 12, one cylinder 11 of which being provided on its outer surface with a pattern formed by raised surface or matrices which are being pressed against the film 1' passing through deposit a complemantary surface pattern on one side of the film formed through plastic deformation to produce the said crease lines 5 and 6. The coold film 1 provided with crease lines subsequently can be rolled up on a magazine roll 13.

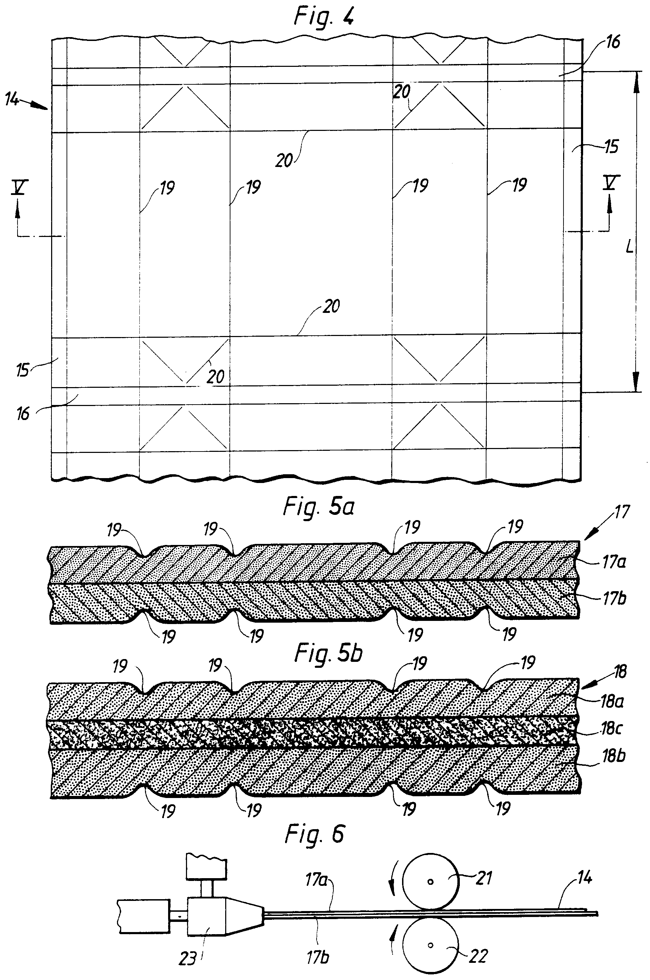

Figure 4 and Figure 5a show a part corresponding to a whole package length L of a packing material in web form in accordance with a second embodiment of the present invention which has been given the general reference designation 14. From the material web 14 are manufactured filled, liquid-tight packing containers, as described previously, in that longitudinal edge zones 15 of the web 14 are joined to one another in an overlap joint so as to form a tube which subsequently is filled with the intended contents. The filled tube is separated thereafter into sealed container units by means of repeated flattening and sealing of the tube along transverse sealing zones 16 at right angles to the longitudinal axis of tube. Thereafter the container units are given the desired geometrical endform, e.g. parallellepipedic, by a further folding sealing operation.

As is evident from Figure 5a the material according to this embodiment comprises a base 17 consisting of base layers 17a and 17b laminated to one another which are manufactured by means of extrusion of a mixture containing a mineral-filled propylene-based polymer with a melt index of between 0,5 and 5 according to ASTM (2,16kg, 230^{o}C) and between 50 and 80, preferably 65-70%, calculated on the total weight of the mixture, of a particulate, inorganic mineral filler. The propylene-based polymer with a melt index within the above specified range may be a propylene homopolymer with a melt index of below 1 according to ASTM (2,16kg, 230^{o}C), but for reasons described earlier is preferably a propylene-ethylene copolymer.

The filler used in the propylene-based polymer of the base layers 17a and 17b may be mica, talc, calcium salts such as calcium sulphate or calcium carbonate etc. In the example shown it is assumed, however, that one base layer 17a, that is the one facing towards the inside of the intended packing container, contains mica, whereas the other base layer 17b contains calcium carbonate in particle form with a grain size of under 10 µm. The thickness of the respective base layers 17a and 17b included in the base 17 may vary between 50-200, but out of practicle considerations the thickness of the respective base layers is preferably 100 µm.

Figure 5b shows a cross section corresponding to that in Figure 5a of a packing material in accordance with a further embodiment of the invention. According to this further embodiment the material comprises a base 18 with outer base layers 18a and 18b of the same material as the base layers 17a and 17b described above with reference to Figure 5a, which are joined to one another by an intermediate layer 18c of a foamed or density-reduced propylene-based polymer with a melt index of between 0,5 and 5 according to ASTM (2,16kg, 230^{o}C).

The total material thickness of the base 18 may vary, but out of practical considerations amounts to approximatically 300 µm, all the layers included in the base 18 preferably having the same mutual layer thickness, that is to say 100 um.

To facilitate the folding of the web 14 in the manufacture of packing containers in the manner described above, the web 14, as is evident from Figure 4, has been provided with an arbitrary pattern of longitudinal and transverse crease lines 19 and 20 respectively. These crease lines (only the longitudinal crease lines 19 whereof are shown in Figure 5a) have been formed by a plastic deformation of the one side or as in the example shown, of both sides of the base 17. In the same manner corresponding crease lines, which for the sake of greater clarity have been given the same reference designations as in Figure 5a, have been formed in the base 18 shown in Figure 5b.

Figure 6 shows schematically an arrangement for the manufacture of the web 14 in accordance with the invention shown in Figure 4 and Figure 5a. The arrangement comprises a coextruder of a type known in itself with a suitably dimensioned nozzle 23 comprising two slot-shaped openings through which respective base layers 17a and 17b included in the material are coextruded from starting material necessary for the respective layers. The web 14 laminated from the co-extruded base layers is passed whilst continuing to be soft through the nip between two co-operating, coold pressure cylinders 21 and 22 which on their surfaces are provided with raised portions or matrices of a design which is such that on being pressed against the web 14 passing through they produce a pattern of crease lines facilitating folding formed on both sides of the web by plastic deformation. The cooled web 14 provided with crease lines subsequently can be rolled up on a magazine roll not shown. In a corresponding manner the weblike packing material in accordance with the further embodiment shown in Figure 5b likewise can be manufactured, the extruder in this case, though comprising a nozzle with three slot-shaped openings so as to make possible a co-extrusion of the three layers 18a-18c included in the base 18.

## Claims

1. Method for producing a relatively flexible creased packaging material to be used for producing liquid-tight packing containers, in which the starting substances for the packaging material, namely thermoplastics as well as inorganic, mineral fillers (at an amount between 50 and 80% by weight) are mixed and are extruded in the soft and melt plastic condition respectively, of said thermoplastics as webs and sheets, respectively, and in which the webs and sheets, respectively, are deformed along the crease lines,
**characterized in that**
the deforming of the webs (4, 17, 18) along the crease lines (5, 6, 19, 20) is carried out in the melt (soft and plastic, respectively) condition thereof.

2. Method as claimed in claim 1,
**characterized in that**
the deforming is carried out by cool rolls and cylinders (11, 12, 21, 22), respectively, provided with raised portions and matrices, respectively.

3. Method as claimed in claim 1 or 2,
**characterized in that**
the deforming of the webs (4, 17, 18) is carried out during extruding.

4. Method as claimed in claim 1 or 2,
**characterized in that**
the deforming of the webs (4, 17, 18) is carried out immediately after extruding in the still melt (plastic) condition before cooling and solidifying of the webs.

5. Method as claimed in one of the preceding claims,
**characterized in that**
some sheets and webs, respectively, are simultaneously extruded and connected together by co-extrusion.

6. Method as claimed in claim 5,
**characterized in that**
three sheets and webs (18a, 18b, 18c), respectively, are co-extruded.
